# FASCICULE DE BREVET EUROPEEN

(11) **EP 3 425 180 B1**
(45) Date de publication et mention de la délivrance du brevet: **25.08.2021**
(21) Numéro de dépôt: 18181689.3
(22) Date de dépôt: 04.07.2018
(51) Int. Cl.: F01N 3/20, F01N 3/28

(54) **DISPOSITIF D'INJECTION POUR UNE LIGNE D'ÉCHAPPEMENT DE VÉHICULE ET LIGNE D'ÉCHAPPEMENT CORRESPONDANTE**
EINSPRITZVORRICHTUNG FÜR EINE AUSPUFFANLAGE EINES FAHRZEUGS, UND ENTSPRECHENDE AUSPUFFANLAGE
INJECTION DEVICE FOR A VEHICLE EXHAUST LINE AND CORRESPONDING EXHAUST LINE

(30) Priorité: 04.07.2017 FR 1756285
(43) Date de publication de la demande: 09.01.2019
(73) Titulaire: Faurecia Systèmes d'Echappement, 92000 Nanterre (FR)
(72) Inventeur: OTTAVIANI, Eric, 90500 BEAUCOURT (FR); DINESCU, Daniel, 25200 MONTBELIARD (FR); MICHELIN, Joël, 25200 MONTBELIARD (FR); FOURCAUDOT, Yannick, 70400 LUZE (FR)
(74) Mandataire: Lavoix

(56) Documents cités:
- EP-A1- 0 864 732
- WO-A1-2015/164356
- WO-A2-2013/104544
- DE-A1-102012 008 556
- DE-A1-102012 021 017
- DE-A1-102014 018 852
- DE-A1-102015 217 357
- DE-B3-102006 058 715
- FR-A1- 2 977 913
- FR-A1- 3 010 134
- US-A1- 2009 056 319

## Description

L'invention concerne en général les dispositifs d'injection de réducteur d'oxydes d'azote pour ligne d'échappement de véhicule.

Les lignes d'échappement de véhicules automobiles équipés de moteurs diesels contiennent fréquemment des catalyseurs de type SCR (Selective Catalytic Reduction ou Réduction Catalytique Sélective en français), dans lesquels les oxydes d'azote contenus dans les gaz d'échappement sont convertis en azote gazeux en présence d'un réducteur tel que l'ammoniac.

Le réducteur d'oxydes d'azote est injecté généralement sous la forme d'un liquide. Ce liquide doit être évaporé et se mélanger au gaz d'échappement de manière homogène, avant d'atteindre le catalyseur.

Il est possible dans ce but d'utiliser des impacteurs. Le flux de liquide injecté est dirigé vers une surface d'impact, et éclate en microgouttelettes, ce qui facilite l'évaporation et la dispersion du produit réducteur dans les gaz d'échappement.

Quand l'injecteur est de type multi-jet, chaque jet est dirigé vers un impacteur dédié.

La quantité de liquide injecté augmente généralement avec le débit de gaz d'échappement. Pour des débits élevés, on constate que l'évaporation de liquide est incomplète, et qu'il peut se former un film liquide sur les impacteurs. Ceci peut conduire à la création de dépôts sur les parois de la chambre d'injection.

FR 3010134 A1 divulgue un dispositif d'injection avec un premier impacteur ayant une première surface d'impact agencée en face de l'injecteur suivant la direction d'injection et un second impacteur ayant une seconde surface d'impact décalée vers l'arrière par rapport au premier impacteur suivant la direction d'injection.

Dans ce contexte, l'invention vise à proposer un dispositif d'injection qui ne présente pas le défaut ci-dessus.

A cette fin, l'invention porte sur un dispositif d'injection pour une ligne d'échappement de véhicule selon la revendication 1.

Ainsi, quand la quantité de liquide injectée est importante, et qu'il se forme un film de liquide sur la première surface d'impact, ce liquide est entraîné par le flux de gaz d'échappement jusqu'au tronçon distant du bord libre de la première surface d'impact et tombe sur la seconde surface d'impact.

Cette seconde surface d'impact est baignée par le flux de gaz d'échappement chaud, de telle sorte qu'elle est à haute température et que le liquide tombant sur la seconde surface d'impact est évaporé.

Il ne se produit donc pas de projection de liquide sur la paroi de la chambre d'injection, et de dépôt sur cette paroi.

Le dispositif d'injection peut en outre présenter une ou plusieurs des caractéristiques ci-dessous, considérées individuellement ou selon toutes les combinaisons techniquement possibles :
- la première surface d'impact est dans un plan incliné par rapport à la direction d'écoulement ;
- la normale à la première surface d'impact forme avec la direction d'écoulement un angle compris entre 100° et 170° ;
- la seconde surface d'impact est dans un plan incliné par rapport à la direction d'écoulement ;
- la normale à la seconde surface d'impact forme avec la direction d'écoulement un angle compris entre 190° et 260° ;
- la normale à la seconde surface d'impact forme avec la direction d'écoulement un angle compris entre 100° et 170° ;
- les première et seconde surfaces d'impact sont parallèles entre elles ;
- les première et seconde surfaces d'impact sont perpendiculaires à la direction d'écoulement, la seconde surface d'impact ayant une superficie plus grande que la première surface d'impact, la première surface d'impact masquant une zone centrale de la seconde surface d'impact selon la direction d'écoulement ;
- la seconde surface d'impact est délimitée par un bord libre ayant au moins un tronçon proche relativement moins éloigné de l'injecteur suivant la direction d'écoulement et un tronçon distant relativement plus éloigné ou aussi éloigné de l'injecteur suivant la direction d'écoulement, le dispositif d'injection ayant au moins un troisième impacteur ayant une troisième surface d'impact, la troisième surface d'impact ayant une zone située sous le tronçon distant du bord libre de la seconde surface d'impact suivant la direction d'écoulement, de telle sorte le liquide entraîné le long de la seconde surface d'impact par le flux de gaz d'échappement jusqu'au tronçon distant tombe sur la troisième surface d'impact ;
- la première surface d'impact est agencée en face de l'injecteur suivant la direction d'injection de manière à intercepter directement au moins 50% du jet de liquide, de préférence au moins 60% du jet de liquide.

Selon un second aspect, l'invention porte sur une ligne d'échappement comprenant un dispositif d'injection ayant les caractéristiques ci-dessus.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'une ligne d'échappement conforme à l'invention ;
- la figure 2 est une vue en perspective du dispositif d'injection de la ligne d'échappement de la figure 1, le couvercle étant partiellement arraché pour laisser apparaître les impacteurs ;
- la figure 3 est une vue de dessus partielle de la chambre d'injection de la figure 2;
- la figure 4 est une représentation schématique simplifiée d'un exemple d'agencement des impacteurs, les impacteurs n'étant pas formés dans une pièce en accordéon comme prévu dans l'invention ;
- les figures 5 à 8 sont des représentations schématiques simplifiées d'autres exemples d'agencement des impacteurs, les impacteurs n'étant pas formés dans une pièce en accordéon comme prévu dans l'invention ;
- la figure 9 et la figure 10 sont des vues en perspective de deux variantes de réalisation particulières des impacteurs de l'invention ;
- les figures 11 et 12 sont des vues respectivement en coupe et de dessus de la chambre d'injection pour une autre variante de réalisation du dispositif d'injection de l'invention ; et
- la figure 13 est une vue en perspective d'un dispositif d'injection conforme à encore une autre variante de réalisation de l'invention, une partie du dispositif étant arrachée pour laisser apparaître la chambre d'injection.

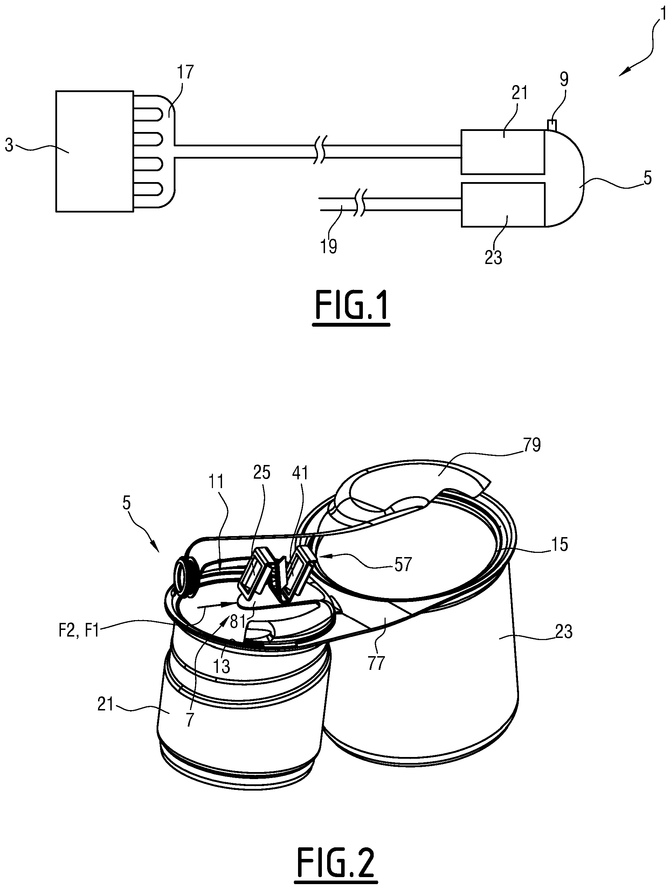

La ligne d'échappement 1 représentée sur la figure 1 est destinée à être intégrée dans un véhicule, typiquement un véhicule automobile tel qu'une voiture ou un camion.

Elle capte les gaz d'échappement provenant du moteur thermique 3 du véhicule, et les relargue dans l'atmosphère après purification.

La ligne d'échappement 1 comporte un dispositif d'injection 5.

Le dispositif d'injection 5 comporte lui-même une chambre d'injection 7 et un injecteur 9 d'un liquide comprenant un réducteur d'oxydes d'azote ou un précurseur d'un tel réducteur.

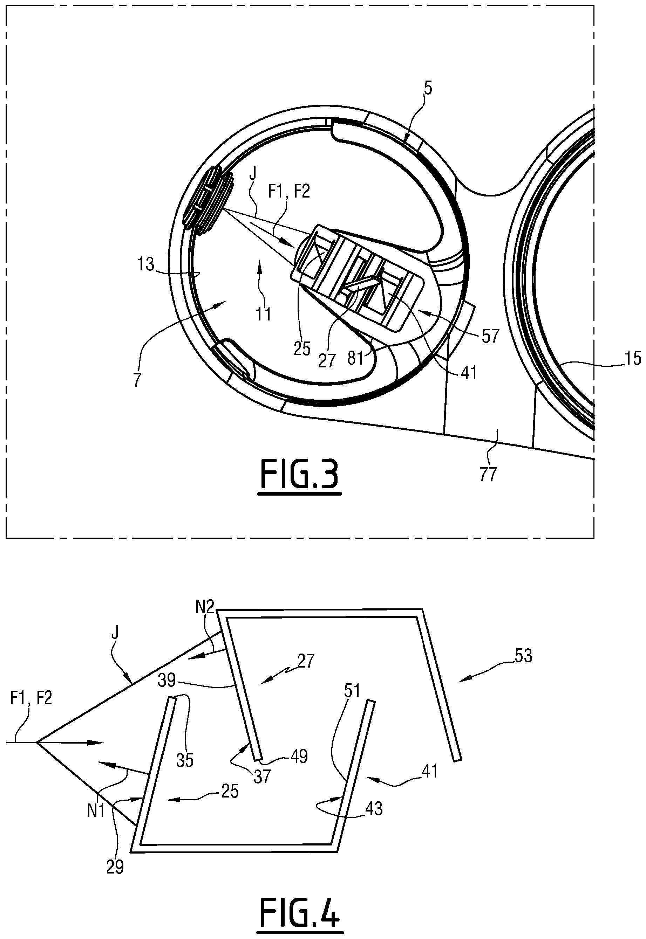

La chambre d'injection 7 est représentée sur les figures 2 et 3. L'injecteur 9 est visible sur la figure 1.

La chambre d'injection 7 comporte une zone d'injection 11 dans laquelle un flux de gaz d'échappement s'écoule suivant une direction d'écoulement matérialisée par la flèche F1 sur les figures 2 et 3.

L'injecteur 9 est orienté par rapport à la chambre d'injection 7 pour injecter un jet de liquide J dans la zone d'injection 11, suivant une direction d'injection (flèche F2 des figures 2 et 3).

L'injecteur 9 est de tout type approprié. Il génère un jet de liquide J, qui peut être de toute forme. Le jet de liquide J est unique ou comprend plusieurs sous-jets.

Le jet ou les sous-jets ont toute forme possible : conique à base circulaire, ovale, de distribution pleine ou creuse.

La direction d'injection F2 correspond à l'axe central du jet de liquide J.

La direction d'injection F2 forme avec la direction d'écoulement F1 un angle αᵢ compris entre 270° et 360°, et de préférence compris entre 300° et 330°.

Le liquide est par exemple une solution aqueuse d'ammoniac, une solution aqueuse d'urée, ou tout autre composé chimique capable de se décomposer en ammoniac sous l'action de la chaleur tel que, par exemple, la guanamine ou un sel d'ammonium quaternaire.

Dans l'exemple représenté sur les figures 2 à 4, la direction d'injection F2 est sensiblement parallèle à la direction d'écoulement F1, l'angle αᵢ étant donc sensiblement égal à 360°.

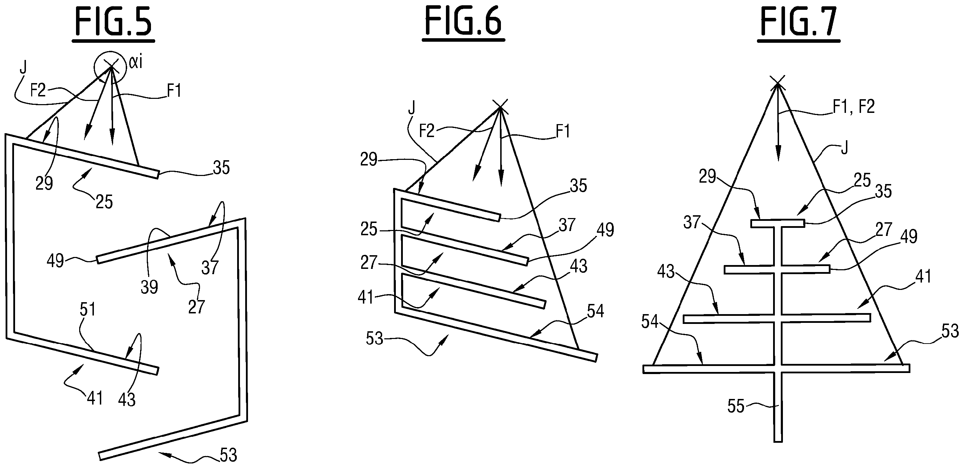

En variante, la direction d'injection F2 n'est pas parallèle à la direction F1. Un tel exemple est illustré sur la figure 5. Dans la représentation de la figure 5, l'angle αᵢ est pris dans le sens trigonométrique.

La zone d'injection 11 correspond à la zone de la chambre d'injection 7 dans laquelle le jet de liquide est injecté.

La direction d'écoulement F1 correspond à la direction générale suivie par la plus grande partie des veines de gaz d'échappement circulant dans la zone d'injection 11.

La chambre d'injection 7 est configurée pour que la plus grande partie des veines de gaz d'échappement s'écoule de préférence suivant une même direction générale dans la zone d'injection 11. Des exemples de telles chambres d'injection 7 sont décrits dans FR 14 54149 et FR 15 59199.

La chambre d'injection 7 présente une entrée de gaz d'échappement 13 et une sortie de gaz d'échappement 15. L'entrée de gaz d'échappement 13 communique fluidiquement avec un collecteur 17, agencé de manière à collecter les gaz d'échappement sortant des chambres de combustion du moteur thermique 3. La sortie de gaz d'échappement 15 communique fluidiquement avec une canule 19, par laquelle les gaz d'échappement purifiés sont relargués dans l'atmosphère (figure 1).

Typiquement, la chambre d'injection 7 est intercalée entre des organes de purification amont et aval 21, 23. L'amont et l'aval sont ici entendus relativement au sens de circulation normale des gaz d'échappement dans la ligne d'échappement 1.

L'organe de purification amont 21 est par exemple un catalyseur comportant une ou plusieurs fonctions, telles que les fonctions d'oxydation ou d'adsorption des oxydes d'azote.

L'organe de purification amont 21 est par exemple un catalyseur d'oxydation, un absorbeur passif d'oxyde d'azote, un piège à NOx, ou un catalyseur trois voies.

L'organe de purification aval 23 est par exemple un catalyseur SCR ou un filtre avec ou sans fonction SCR.

Selon un exemple de réalisation, les organes de purification 21 et 23 sont disposés côte à côte, et présentent des axes centraux respectifs sensiblement parallèles l'un à l'autre. On entend par là que les axes centraux respectifs des organes de purification amont et aval 21 et 23 sont parallèles l'un à l'autre ou forment un angle l'un avec l'autre inférieur à 30°, et de préférence inférieur à 15°.

Une telle configuration est représentée sur les figures 2 et 3.

La chambre d'injection 7 met en communication la sortie de l'organe de purification amont 21 avec l'entrée de l'organe de purification aval 23.

La sortie de l'organe de purification amont 21 est placée en coïncidence avec l'entrée de gaz d'échappement 13, et l'entrée de l'organe de purification aval 23 est placée en coïncidence avec la sortie de gaz d'échappement 15.

Le dispositif d'injection 5 comporte encore un premier impacteur 25 et au moins un second impacteur 27. Le premier impacteur 25 a une première surface d'impact 29 agencée en face de l'injecteur 9 suivant la direction d'injection F2, de manière à intercepter directement au moins 30% du jet de liquide J.

De préférence, la première surface d'impact 29 intercepte au moins 50% du jet de liquide J, et encore de préférence au moins 60% du jet de liquide J.

Par exemple, la première surface d'impact 29 intercepte 100% du jet de liquide (voir par exemple la figure 5).

Le terme « X% du jet de liquide » correspond au pourcentage du volume de liquide injecté qui est intercepté par la première surface d'impact.

Quand la première surface d'impact 29 n'intercepte pas la totalité du jet de liquide, la seconde surface d'impact 37 intercepte le reste du jet de liquide (voir par exemple la figure 4).

Selon une autre variante, le dispositif d'injection 5 comporte une pluralité d'impacteurs, chaque impacteur ayant une surface d'impact interceptant une fraction du jet de liquide (voir par exemple les figures 6 et 7).

La première surface d'impact 29 est une surface continue. Elle n'est pas constituée de plusieurs portions disjointes.

La première surface d'impact 29 est délimitée par un bord libre 31 ayant au moins un tronçon proche 33 relativement moins éloigné de l'injecteur 9 suivant la direction d'écoulement F1, et un tronçon distant 35 relativement plus éloigné ou aussi éloigné de l'injecteur 9 que le tronçon proche 33 suivant la direction d'écoulement F1.

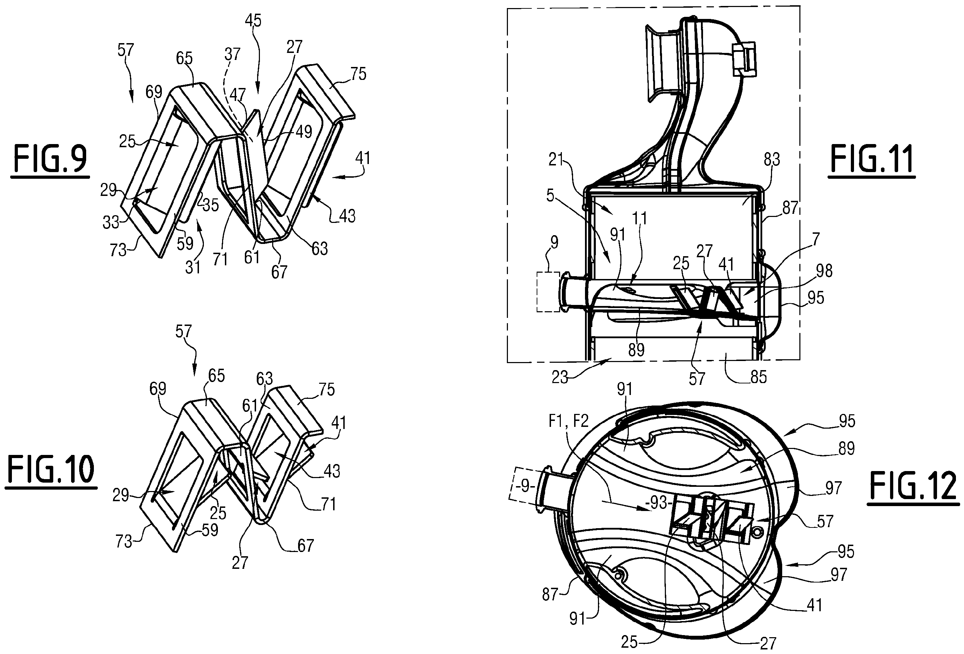

Le second impacteur 27 présente une seconde surface d'impact 37 ayant une zone 39 située sous le tronçon distant 35 du bord libre 31 de la première surface d'impact suivant la direction d'écoulement F1 (voir figure 9).

La zone 39 est située sous le tronçon distant 35 suivant la direction d'écoulement F1 au sens où la zone 39 est décalée par rapport au tronçon distant 35 suivant la direction d'écoulement F1 et que la projection du tronçon distant 35 sur la seconde surface d'impact 37 suivant la direction d'écoulement F1 est située dans la zone 39.

Ainsi, le liquide entraîné le long de la première surface d'impact 29 par le flux de gaz d'échappement jusqu'au tronçon distant 35 tombe sur la seconde surface d'impact 37.

Avantageusement, le dispositif d'injection 5 comprend au moins un troisième impacteur 41, ayant une troisième surface d'impact 43. La seconde surface d'impact 37 est délimitée par un bord libre 45 ayant lui aussi un tronçon proche 47 relativement moins éloigné de l'injecteur 9 et un tronçon distant 49 relativement plus éloigné ou aussi éloigné de l'injecteur 9 suivant la direction d'écoulement F1 que le tronçon proche 47 (figure 9).

La troisième surface d'impact 43 a une zone 51 située sous le tronçon distant 49 du bord libre 45 de la seconde surface d'impact 37 suivant la direction d'écoulement F1 (figure 4). Ainsi, le liquide entraîné le long de la seconde surface d'impact 37 par le flux de gaz d'échappement jusqu'au tronçon distant 49 tombe sur la troisième surface d'impact 43.

Avantageusement, le dispositif d'injection 5 comprend encore un ou plusieurs impacteurs supplémentaires, agencés en cascade derrière le troisième impacteur 41. Chaque impacteur est disposé de manière à recueillir le liquide qui serait entraîné par le flux de gaz d'échappement.

En d'autres termes, le dispositif d'injection 5 comprend une pluralité d'impacteurs agencés en cascade les uns derrière les autres suivant la direction d'écoulement F1 du gaz d'échappement, chaque impacteur étant agencé de manière à collecter le liquide qui serait entraîné sur la surface d'impact de l'impacteur précédent par le flux de gaz d'échappement.

Chaque impacteur est typiquement une plaque métallique, de faible épaisseur au regard de sa surface.

Les surfaces d'impact ont toutes sortes de formes. Dans les exemples représentés, les surfaces d'impact sont rectangulaires. En variante, elles sont circulaires, ou ovales, ou ont toute autre forme adaptée. Chaque bord libre 31 a une forme correspondant à celle de la surface d'impact. Dans les exemples représentés, le bord libre a une forme en U. En variante, le bord libre a une forme en arc de cercle, ou en portion d'ovale, ou toute autre forme adaptée.

Le tronçon distant 35 peut également avoir toute forme adaptée. Dans les exemples représentés, il a une forme rectiligne. En variante il a une forme arquée, par exemple en arc de cercle.

Typiquement, le tronçon distant 35 est la partie du bord libre 31 la plus éloignée de l'injecteur 9 suivant la direction d'écoulement des gaz.

Selon un exemple de réalisation, la première surface d'impact 29 est dans un plan incliné par rapport à la direction d'écoulement F1. On entend par là que la normale N1 à la première surface d'impact 29 n'est pas parallèle ou perpendiculaire à la direction d'écoulement F1 (figure 4). En d'autres termes, la normale N1 ne forme pas un angle de 0°, 90°, 180°, 270° ou de 360° avec la direction d'écoulement F1.

Typiquement, la normale N1 à la première surface d'impact forme avec la direction d'écoulement F1 un angle compris entre 100° et 170°. Une telle orientation est représentée sur la figure 4.

Dans ce cas, la seconde surface d'impact 37 est avantageusement également dans un plan incliné par rapport à la direction d'écoulement F1.

La normale N2 à la seconde surface d'impact 37 forme avantageusement avec la direction d'écoulement F1 un angle compris entre 190° et 260°. Une telle configuration est représentée sur les figures 4 et 5.

Dans l'exemple de réalisation de la figure 4, le dispositif d'injection 5 comporte un troisième impacteur 41, parallèle au premier impacteur 25. Il comporte également un quatrième impacteur 53, parallèle au second impacteur 27.

En variante, le dispositif d'injection 5 comporte un troisième impacteur 41, non parallèle au premier impacteur 25 et/ou un quatrième impacteur 53, non parallèle au second impacteur 27.

Le troisième impacteur 41 a la même forme et la même taille que le premier impacteur 25.

Le quatrième impacteur 53 a la même forme et la même taille que le second impacteur 27.

En alternative, le troisième impacteur 41 n'a pas la même forme que le premier impacteur 25, ou n'a pas la même taille que le premier impacteur 25, ou n'a ni la même forme ni la même taille que le premier impacteur 25.

Dans une autre alternative, le quatrième impacteur 53 n'a pas la même forme que le second impacteur 27, ou n'a pas la même taille que le second impacteur 27, ou n'a ni la même forme ni la même taille que le second impacteur 27.

Par ailleurs, dans l'exemple de réalisation de la figure 4, environ 60% du jet de liquide J est intercepté par la première surface d'impact 29, le reste du jet J étant intercepté par la seconde surface d'impact 37.

Sur la figure 4, la direction d'injection F2 et la direction d'écoulement F1 sont sensiblement parallèles l'une à l'autre.

Dans l'exemple de réalisation de la figure 5, les impacteurs sont agencés comme dans l'exemple de réalisation de la figure 4. En revanche, la direction d'injection F2 n'est pas parallèle à la direction d'écoulement F1. La première surface d'impact 29 intercepte 100% du jet de liquide.

Selon un autre exemple de réalisation de l'invention, la normale N1 à la première surface d'impact 29 forme avec la direction d'écoulement F1 un angle compris entre 100 et 170°, et la normale N2 à la seconde surface d'impact 37 forme avec la direction d'écoulement F1 elle aussi un angle compris entre 100 et 170°. Une telle situation est illustrée sur la figure 6.

Typiquement, les première et seconde surfaces d'impact 29 et 37 sont parallèles entre elles. En variante, elles ne sont pas parallèles entre elles.

Ainsi, dans l'exemple de réalisation de la figure 6, les première et seconde surfaces d'impact 29 et 37 sont inclinées du même côté par rapport à la direction d'écoulement F1, alors que dans le mode de réalisation des figures 4 et 5, elles étaient inclinées de deux côtés opposés de la direction d'écoulement F1.

Dans l'exemple de réalisation de la figure 6, le dispositif d'injection 5 comprend un troisième impacteur 41 et un quatrième impacteur 53, qui sont parallèles aux premier et second impacteurs 25, 27.

Chacun des impacteurs 25, 27, 41, 53 présente une surface d'impact tournée vers l'injecteur 9, qui intercepte une fraction du jet de liquide J.

Dans encore un autre exemple de réalisation, les première et seconde surfaces d'impact 29 et 37 sont perpendiculaires à la direction d'écoulement F1. La seconde surface d'impact 37 a une superficie plus grande que la première surface d'impact 29, la première surface d'impact 29 masquant une zone centrale de la seconde surface d'impact 37 selon la direction d'écoulement F1.

Une telle configuration est représentée sur la figure 7.

Dans cet exemple, le dispositif d'injection comporte un troisième impacteur 41 et un quatrième impacteur 53 qui sont agencés de telle sorte que les troisième et quatrième surfaces d'impact 43 et 54 soient également perpendiculaires à la direction d'écoulement F1. Ainsi, toutes les surfaces d'impact sont parallèles entre elles.

La troisième surface d'impact 43 a une superficie plus grande que la seconde surface d'impact 37, et la quatrième surface d'impact 54 une superficie plus grande que la troisième surface d'impact 43. La troisième surface d'impact 43 masque la zone centrale de la quatrième surface d'impact 54 selon la direction d'écoulement F1, et la seconde surface d'impact 37 masque la zone centrale de la troisième surface d'impact 43 selon la direction d'écoulement F1.

Dans un tel agencement, tous les tronçons du bord libre d'une surface d'impact donnée sont à la même distance de l'injecteur 9.

Les différents impacteurs 25, 27, 41, 53 sont solidarisés les uns aux autres par une tige 55, passant par les centres respectifs des impacteurs 25, 27, 41, 53. Alternativement, la tige 55 passe par des points qui ne sont pas aux centres des impacteurs 25, 27, 41, 53.

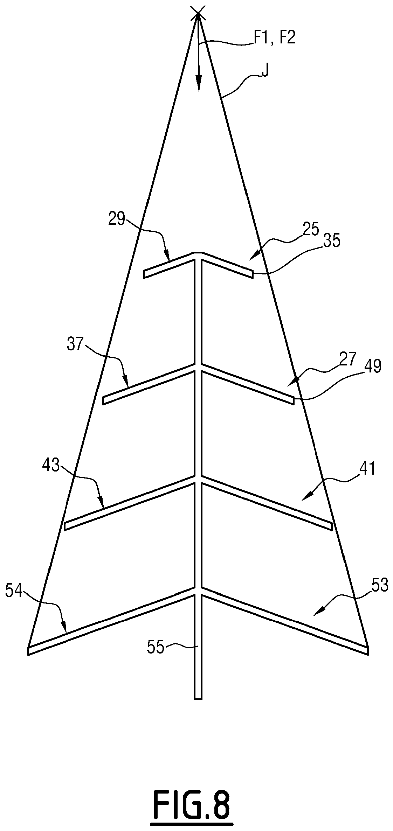

La figure 8 illustre une variante de réalisation de la figure 7. Seuls les points par lesquels la variante de réalisation de la figure 8 diffère de celle de la figure 7 seront détaillés ci-dessous.

Les première et seconde surfaces d'impact 29 et 37 sont coniques, avec des axes centraux confondus et parallèles à la direction d'écoulement F1. Les première et seconde surfaces d'impact 29 et 37 pointent en direction de l'injecteur 9.

Les angles d'ouvertures respectifs des cônes formés par les première et seconde surfaces d'impact 29 et 37 sont sensiblement identiques. Ainsi, les première et seconde surfaces d'impact 29 et 37 sont parallèles entre elles.

Dans cet exemple, les troisième et quatrième surfaces d'impact 43 et 54 sont également coniques, avec des axes centraux confondus et parallèles à la direction d'écoulement F1. Les troisième et quatrième surfaces d'impact 43 et 54 pointent en direction de l'injecteur 9.

Les angles d'ouvertures respectifs des cônes formés par les troisième et quatrième surfaces d'impact 43 et 54 sont sensiblement égaux aux angles d'ouverture des première et seconde surfaces d'impact 29 et 37. Ainsi, toutes les surfaces d'impact 29, 37, 43, 54 sont parallèles entre elles.

En variante, les surfaces d'impact 29, 37, 43, 54 n'ont pas toutes le même angle d'ouverture, celui-ci étant par exemple croissant de la première à la quatrième surface d'impact.

Typiquement, les angles d'ouverture des surfaces d'impact 29, 37, 43, 54 sont compris entre 10° et 80°.

Selon l'invention, les premier et second impacteurs 25, 27 sont formés dans des pans d'une pièce en accordéon, comme illustré par exemple sur les figures 9 et 10.

Typiquement, tous les impacteurs sont formés dans des pans de la pièce en accordéon.

Plus précisément, le dispositif d'injection 5 comporte une plaque métallique 57 pliée en accordéon. Dans les exemples représentés sur les figures 9 et 10, l'accordéon comprend trois pans 59, 61, 63 raccordés par des portions intermédiaires 65 et 67. Les impacteurs 25, 27, 41 sont formés par découpe respectivement des pans 59, 61 et 63.

Ainsi, les impacteurs sont réalisés par pliage d'une pièce métallique et emboutissage.

Par exemple, les pans 59 et 61 forment entre eux un angle compris entre 15 et 60°, les pans 61 et 63 formant entre eux un angle compris entre 15 et 60°. Chaque impacteur 25, 27, 41 forme par rapport aux pans 59, 61, 63 un angle compris entre 0 et 45°.

Dans la variante de la figure 9, la plaque 57 est initialement, c'est-à-dire avant pliage, allongée suivant une direction longitudinale. Elle est délimitée par des premier et second bords longitudinaux 69 et 71, et deux bords transversaux 73 et 75. Elle est pliée autour de lignes de pliage transversales, de manière à former les pans 59, 61 et 63.

Le premier impacteur 25 est découpé sur trois côtés et lié par un quatrième côté au pan 59, ce quatrième côté étant tourné vers le premier bord longitudinal 69.

Le second impacteur 27 est lui aussi découpé sur trois côtés et reste lié au second pan 61 par un côté tourné vers le second bord longitudinal 71.

Par ailleurs, le troisième impacteur 41 est agencé comme le premier impacteur 25, à savoir qu'il est découpé sur trois côtés et reste lié au troisième pan 63 par un côté tourné vers le premier bord longitudinal 69.

La figure 10 décrit une autre variante de réalisation des impacteurs. La seule différence par rapport à la variante de la figure 9 est que le premier impacteur 25 est lié au premier pan 59 par un côté tourné vers le bord transversal 73 de la plaque. Le second impacteur 27 est lié au second pan 61 par un côté transversal tourné vers la portion intermédiaire 65. Le troisième impacteur 41 est lié au troisième pan 63 par un côté tourné vers la portion intermédiaire 67.

Selon une variante de réalisation, les impacteurs sont disposés comme illustré sur les figures 2 et 3. Ils sont agencés dans une chambre d'injection du type décrit dans FR 14 54149.

Dans cette variante de réalisation, la chambre d'injection 7 comporte une lunette 77 dans laquelle sont ménagées l'entrée 13 et la sortie 15 de gaz d'échappement, et un capot 79 rapporté sur la lunette 77. La chambre d'injection 7 comporte encore un déflecteur 81. Le déflecteur est une langue, s'étendant à partir d'une première zone du bord périphérique de l'entrée 13 vers une seconde zone du bord périphérique de l'entrée 13, diamétralement opposée à la première.

La langue 81, considérée en projection orthogonale sur l'entrée 13, couvre entre 20 et 70% de la surface totale de l'entrée. La langue 81, considérée en projection orthogonale sur l'entrée 13 définit deux zones libres de part et d'autre de ladite langue. Ces zones libres sont de préférence de même taille et sont symétriques l'une de l'autre par rapport à la langue 81.

La langue est venue de matière de préférence avec la lunette 77. Les impacteurs sont fixés le capot 79. En alternative, les impacteurs sont fixés sur la langue 81.

Les gaz d'échappement pénétrant dans la chambre d'injection 7 par l'entrée 13 forment deux vortex de part et d'autre de la langue 81. Ces deux vortex ont des axes de rotation parallèles à la direction d'injection, et ont des sens de rotation inverses le long de leurs axes respectifs. Les gaz d'échappement s'écoulent suivant une direction générale sensiblement parallèle à la direction d'injection.

Le liquide injecté par l'injecteur 9 forme un jet J (figure 3). Dans cet exemple de réalisation, tout le liquide vient frapper la première surface d'impact 29. Le jet de liquide explose en gouttelettes de petites tailles au contact du premier impacteur 25, qui est maintenu à haute température par les gaz d'échappement. Du fait de leur taille, les gouttelettes sont rapidement évaporées par les gaz d'échappement et se dispersent de manière uniforme dans le flux de gaz d'échappement.

Au cas où un film liquide se forme sur la première surface d'impact 29, ce film est entraîné par le flux de gaz d'échappement jusqu'au tronçon distant 35 du bord libre 31, et est projeté sur le second impacteur 27.

Si le flux de liquide arrivant sur le second impacteur 27 est trop élevé pour pouvoir être évaporé au contact de la surface d'impact du second impacteur 27, l'excès de liquide est repoussé par le flux de gaz d'échappement jusqu'au tronçon distant 49 du bord libre 45 de la seconde surface d'impact 37. Cet excès de liquide tombe alors sur la surface d'impact 43 du troisième impacteur 41.

Selon une autre variante, les impacteurs sont disposés comme décrit dans la demande de brevet FR 15 59199. Un tel agencement est représenté sur les figures 11 et 12.

Dans cet exemple, les organes de purification amont et aval 21, 23 ne sont pas placés côte à côte mais dans le prolongement l'un de l'autre. Le substrat de purification 83 de l'organe amont 21 et le substrat de purification 85 de l'organe aval 23 sont logés à l'intérieur d'une enveloppe commune 87.

La chambre d'injection 7 correspond ici au volume séparant la face de sortie du substrat amont 83 à la face d'entrée du substrat aval 85. Une coupelle 89 est placée dans la chambre d'injection 7.

La coupelle 89 présente deux ailes 91 disposées de part et d'autre d'un canal d'injection 93. Les deux ailes 91 sont inclinées de telle sorte que, à partir du canal d'injection 93, elles s'écartent l'une de l'autre et s'étendent vers le substrat amont 83. En d'autres termes, considérée perpendiculairement à la direction d'injection, la coupelle présente des sections en V.

Le canal d'injection 93 constitue la zone d'injection 11. Il s'étend selon la direction d'injection, qui correspond à un diamètre de la coupelle 89.

Deux coques 95 sont rapportées sur une surface externe de l'enveloppe 87. Elles délimitent intérieurement chacune un chemin de passage circonférentiel 97 pour les gaz d'échappement depuis le volume délimité entre la coupelle 89 et le substrat amont 83 jusqu'au volume délimité entre la coupelle 89 et le substrat aval 85. Ces chemins de passage présentent une entrée 98 pour les gaz d'échappement située à l'extrémité du canal d'injection 93 opposée à l'injecteur 9.

Comme visible sur les figures 11 et 12, les impacteurs 25, 27 et 41 sont disposés dans le canal d'injection 93. Ils sont rigidement fixés à la coupelle 89, sur une face de celle-ci tournée vers le substrat amont 83.

Les gaz d'échappement sortant par la face de sortie du substrat amont 83 viennent frapper directement la coupelle 89. Une partie des gaz est collectée directement par le canal d'injection 93 et est déviée le long du canal jusqu'à l'entrée 98 des deux chemins de passage 97. La fraction des gaz d'échappement arrosant les deux ailes 91 est guidée par ces ailes jusqu'au canal d'injection 93. Ces gaz sont ensuite canalisés par le canal d'injection 93 jusqu'à l'entrée 98. L'écoulement le long du canal 93 est sensiblement parallèle à la direction d'injection. L'injecteur 9 injecte le jet de liquide J suivant la direction d'injection dans le canal d'injection 93. Dans l'exemple représenté, la totalité du jet vient frapper la surface d'impact du premier impacteur 25. Le fonctionnement des impacteurs est comme décrit plus haut.

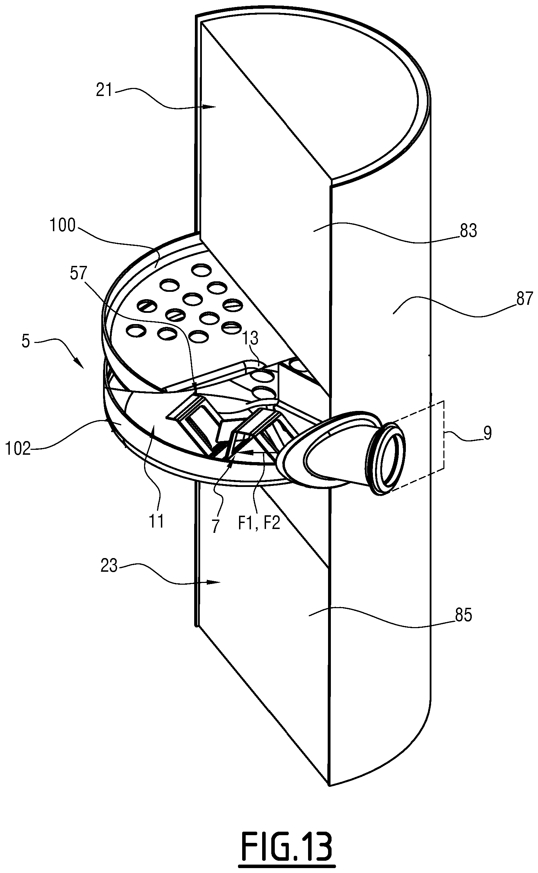

Un troisième exemple d'agencement des impacteurs est illustré sur la figure 13. Dans ce cas, la chambre d'injection 7 est agencée comme décrit dans la demande de brevet déposée sous la référence FR 09 54199.

De nouveau, les organes de purification amont et aval 21 et 23 sont placés dans le prolongement l'un de l'autre. Les substrats amont et aval 83 et 85 sont logés dans une enveloppe unique 87. La chambre d'injection 7 est délimitée entre des coupelles amont et aval 100 et 102, placées dans le volume séparant la face de sortie du substrat amont 83 de la face d'entrée du substrat aval 85. Les coupelles amont et aval 100 et 102 ont chacune un fond en forme de rampe hélicoïdale. La coupelle amont 100 délimite l'entrée de la chambre d'injection 7 et la coupelle aval 102 délimite la sortie.

Les gaz d'échappement suivent un parcours sensiblement hélicoïdal dans la chambre d'injection 7. L'injecteur 9 est agencé de manière à injecter le liquide selon une direction sensiblement tangente aux lignes de flux. Les impacteurs 25, 27, 41 sont fixés à la coupelle aval 102.

Il est à noter que, dans toutes les variantes de réalisation, le premier impacteur 25 est plat. La première surface d'impact 29 est donc plane. Le second impacteur 27 est également plat, et la seconde surface d'impact 37 est donc plane.

Les première et seconde surfaces d'impact 29, 37 sont parallèles l'une à l'autre.

En variante, la première surface d'impact 29 est inclinée vers la seconde surface d'impact 37. On entend par là que la zone de la première surface d'impact la plus proche de l'injecteur suivant la direction d'écoulement F1 est relativement plus éloignée de la zone 39 de la seconde surface d'impact située sous le tronçon distant 35, et que la zone de la première surface d'impact la plus éloignée de l'injecteur suivant la direction d'écoulement F1 est relativement plus proche de la zone 39 de la seconde surface d'impact située sous le tronçon distant 35.

De la même façon, la troisième surface d'impact 43 est avantageusement plane.

Elle est parallèle aux première et seconde surface d'impact 29, 37.

En variante, la seconde surface d'impact 37 est inclinée vers la troisième surface d'impact 43. On entend par là que la zone de la seconde surface d'impact 37 la plus proche de l'injecteur suivant la direction d'écoulement F1 est relativement plus éloignée de la zone 51 de la troisième surface d'impact située sous le tronçon distant 49, et que la zone de la seconde surface d'impact 37 la plus éloignée de l'injecteur suivant la direction d'écoulement F1 est relativement plus proche de la zone 51 de la seconde surface d'impact située sous le tronçon distant 49.

Ainsi, les première et seconde surfaces d'impact 29, 37 ne présentent pas une forme convexe vers l'injecteur, qui tend à disperser les gouttelettes rebondissant sur la surface d'impact. Au contraire, du fait de leur forme et de leur orientation, elles tendent à collecter le liquide et à le diriger vers la surface d'impact située en-dessous dans la cascade.

Ceci est facilité par le fait que les impacteurs sont disposés proches les uns des autres suivant la direction d'injection. Selon la direction d'injection, l'écartement entre un impacteur donné et l'impacteur suivant dans la cascade est inférieur à la plus grande dimension de la surface d'impact de l'impacteur donné.

## Revendications

1. Dispositif d'injection (5) pour une ligne d'échappement de véhicule, comprenant :
- une chambre d'injection (7) ayant une zone d'injection (11) dans laquelle un flux de gaz d'échappement s'écoule suivant une direction d'écoulement (F1) ;
- un injecteur (9) d'un liquide contenant un réducteur d'oxyde d'azote ou un précurseur d'un tel réducteur, l'injecteur (9) étant orienté par rapport à la chambre d'injection (7) pour injecter un jet de liquide (J) dans la zone d'injection (11) suivant une direction d'injection formant avec la direction d'écoulement (F1) un angle compris entre 270° et 360° ;
- un premier impacteur (25) ayant une première surface d'impact (29) agencée en face de l'injecteur (9) suivant la direction d'injection de manière à intercepter directement au moins 30% du jet de liquide (J), la première surface d'impact (29) étant délimitée par un bord libre (31) ayant au moins un tronçon proche (33) relativement moins éloigné de l'injecteur (9) suivant la direction d'écoulement (F1) et un tronçon distant (35) relativement plus éloigné ou aussi éloigné de l'injecteur (9) suivant la direction d'écoulement (F1) ;
- au moins un second impacteur (27) ayant une seconde surface d'impact (37), ayant une zone (39) située sous le tronçon distant (35) du bord libre (31) de la première surface d'impact (29) suivant la direction d'écoulement (F1), de telle sorte le liquide entraîné le long de la première surface d'impact (29) par le flux de gaz d'échappement jusqu'au tronçon distant (35) tombe sur la seconde surface d'impact (37) ;
les premier et second impacteurs (25, 27) étant formés dans des pans d'une pièce (57) en accordéon.

2. Dispositif d'injection selon la revendication 1, dans lequel la première surface d'impact (29) est dans un plan incliné par rapport à la direction d'écoulement (F1).

3. Dispositif d'injection selon la revendication 1 ou 2, dans lequel la normale (N1) à la première surface d'impact (29) forme avec la direction d'écoulement (F1) un angle compris entre 100° et 170°.

4. Dispositif d'injection selon l'une quelconque des revendications précédentes, dans lequel la seconde surface d'impact (37) est dans un plan incliné par rapport à la direction d'écoulement (F1).

5. Dispositif d'injection selon l'une quelconque des revendications précédentes, dans lequel la normale (N2) à la seconde surface d'impact (37) forme avec la direction d'écoulement (F1) un angle compris entre 190° et 260°.

6. Dispositif d'injection selon l'une quelconque des revendications 1 à 4, dans lequel la normale (N2) à la seconde surface d'impact (37) forme avec la direction d'écoulement (F1) un angle compris entre 100° et 170°.

7. Dispositif d'injection selon l'une quelconque des revendications précédentes, dans lequel les première et seconde surfaces d'impact (29, 37) sont parallèles entre elles.

8. Dispositif d'injection selon la revendication 1, dans lequel les première et seconde surfaces d'impact (29, 37) sont perpendiculaires à la direction d'écoulement (F1), la seconde surface d'impact (37) ayant une superficie plus grande que la première surface d'impact (29), la première surface d'impact (29) masquant une zone centrale de la seconde surface d'impact (37) selon la direction d'écoulement (F1).

9. Dispositif d'injection selon l'une quelconque des revendications précédentes, dans lequel la seconde surface d'impact (37) est délimitée par un bord libre (45) ayant au moins un tronçon proche (47) relativement moins éloigné de l'injecteur (9) suivant la direction d'écoulement (F1) et un tronçon distant (49) relativement plus éloigné ou aussi éloigné de l'injecteur (9) suivant la direction d'écoulement (F1), le dispositif d'injection (5) ayant au moins un troisième impacteur (41) ayant une troisième surface d'impact (43), la troisième surface d'impact (43) ayant une zone (51) située sous le tronçon distant (49) du bord libre (45) de la seconde surface d'impact (37) suivant la direction d'écoulement (F1), de telle sorte le liquide entraîné le long de la seconde surface d'impact (37) par le flux de gaz d'échappement jusqu'au tronçon distant (49) tombe sur la troisième surface d'impact (43).

10. Dispositif d'injection selon l'une quelconque des revendications précédentes, dans lequel la première surface d'impact (29) est agencée en face de l'injecteur (9) suivant la direction d'injection de manière à intercepter directement au moins 50% du jet de liquide (J), de préférence au moins 60% du jet de liquide (J).

11. Ligne d'échappement (1) comprenant un dispositif d'injection (5) selon l'une quelconque des revendications précédentes.

## Patentansprüche

1. Einspritzvorrichtung (5) für eine Fahrzeug-Abgasleitung, umfassend:
- eine Einspritzkammer (7) mit einer Einspritzzone (11), in die ein Abgasstrom in einer Strömungsrichtung (F1) einströmt;
- einen Injektor (9) für eine Flüssigkeit, die ein Stickoxid-Reduktionsmittel oder einen Vorläufer eines solchen Reduktionsmittels enthält, wobei der Injektor (9) in Bezug auf die Einspritzkammer (7) ausgerichtet ist, einen Flüssigkeitsstrahl (J) in die Einspritzzone (11) in einer Einspritzrichtung einzuspritzen, die einen Winkel zwischen 270° und 360° mit der Strömungsrichtung (F1) bildet;
- einen ersten Prallkörper (25) mit einer ersten Aufprallfläche (29), die in Einspritzrichtung gegenüber dem Injektor (9) angeordnet ist, um mindestens 30 % des Flüssigkeitsstrahls (J) direkt abzufangen, wobei die erste Aufprallfläche (29) durch eine freie Kante (31) begrenzt ist, die mindestens einen in Strömungsrichtung (F1) relativ weniger vom Injektor (9) entfernten naheliegenden Abschnitt (33) und einen relativ weiter entfernten oder so weit wie in Strömungsrichtung (F1) vom Injektor (9) entfernten beabstandeten Abschnitt (35) aufweist;
- mindestens einen zweiten Prallkörper (27) mit einer zweiten Aufprallfläche (37), mit einem Bereich (39) unterhalb des in Strömungsrichtung (F1) beabstandeten Abschnitts (35) der freien Kante (31) der ersten Aufprallfläche (29), derart dass die entlang der ersten Aufprallfläche (29) vom Abgasstrom bis zum beabstandeten Abschnitt (35) mitgerissene Flüssigkeit auf die zweite Aufprallfläche (37) fällt;
wobei der erste und der zweite Prallkörper (25, 27) in Abschnitten eines ziehharmonikaähnlichen Elements (57) ausgebildet sind.

2. Einspritzvorrichtung nach Anspruch 1, bei der die erste Aufprallfläche (29) in einer zur Strömungsrichtung (F1) geneigten Ebene liegt.

3. Einspritzvorrichtung nach Anspruch 1 oder 2, bei der die Normale (N1) zur ersten Aufprallfläche (29) mit der Strömungsrichtung (F1) einen Winkel zwischen 100° und 170° bildet.

4. Einspritzvorrichtung nach einem beliebigen der vorhergehenden Ansprüche, bei der die zweite Aufprallfläche (37) in einer zur Strömungsrichtung (F1) geneigten Ebene liegt.

5. Einspritzvorrichtung nach einem beliebigen der vorhergehenden Ansprüche, bei der die Normale (N2) zur zweiten Aufprallfläche (37) mit der Strömungsrichtung (F1) einen Winkel zwischen 190° und 260° bildet.

6. Einspritzvorrichtung nach einem beliebigen der Ansprüche 1 bis 4, bei der die Normale (N2) zur zweiten Aufprallfläche (37) einen Winkel zwischen 100° und 170° mit der Strömungsrichtung (F1) bildet.

7. Einspritzvorrichtung nach einem beliebigen der vorhergehenden Ansprüche, bei der die erste und zweite Aufprallfläche (29, 37) parallel zueinander sind.

8. Einspritzvorrichtung nach Anspruch 1, bei der die erste und die zweite Aufprallfläche (29, 37) senkrecht zur Strömungsrichtung (F1) liegen, wobei die zweite Aufprallfläche (37) eine größere Oberfläche als die erste Aufprallfläche (29) aufweist und die erste Aufprallfläche (29) eine mittlere Zone der zweiten Aufprallfläche (37) gemäß der Strömungsrichtung (F1) verdeckt.

9. Einspritzvorrichtung nach einem beliebigen der vorhergehenden Ansprüche, bei der die zweite Aufprallfläche (37) durch eine freie Kante (45) begrenzt ist, die mindestens einen in Strömungsrichtung (F1) vom Injektor (9) relativ weniger entfernten naheliegenden Abschnitt (47) und einen relativ weiter entfernten oder so weit wie in Strömungsrichtung (F1) vom Injektor (9) entfernten beabstandeten Abschnitt (49) aufweist, wobei die Einspritzvorrichtung (5) mindestens einen dritten Prallkörper (41) mit einer dritten Aufprallfläche (43) aufweist, wobei die dritte Aufprallfläche (43) einen Bereich (51) unterhalb des in Strömungsrichtung (F1) beabstandeten Abschnitts (49) der freien Kante (45) der zweiten Aufprallfläche (37) aufweist, derart dass die entlang der zweiten Aufprallfläche (37) von dem Abgasstrom bis zum beabstandeten Abschnitt (49) mitgerissene Flüssigkeit auf die dritte Aufprallfläche (43) fällt.

10. Einspritzvorrichtung nach einem beliebigen der vorhergehenden Ansprüche, wobei die erste Aufprallfläche (29) entlang der Einspritzrichtung vor dem Injektor (9) so angeordnet ist, dass sie mindestens 50 % des Flüssigkeitsstrahls (J), vorzugsweise mindestens 60 % des Flüssigkeitsstrahls (J), direkt abfängt.

11. Abgasleitung (1) mit einer Einspritzvorrichtung (5) nach einem beliebigen der vorhergehenden Ansprüche.

## Claims

1. Injection device (5) for a vehicle exhaust line, comprising:
- an injection chamber (7) having an injection zone (11) in which an exhaust gas stream flows in a direction of flow (F1);
- an injector (9) of a liquid containing a nitrogen oxide reducing agent or a precursor of such a reducing agent, wherein the injector (9) is oriented relative to the injection chamber (7) for injecting a liquid jet (J) in the injection zone (11) in an injection direction forming an angle of between 270° and 360° to the direction of flow (F1);
- a first impactor (25) having a first impact surface (29) arranged facing the injector (9) in the direction of injection in order to directly intercept at least 30% of the liquid jet (J), wherein the first impact surface (29) is delimited by a free edge (31) having at least one near section (33) relatively less distant from the injector (9) in the direction of flow (F1) and a remote section (35) relatively further away or as far away from the injector (9) in the direction of flow (F1);
- at least one second impactor (27) having a second impact surface (37), having a zone (39) located under the remote section (35) of the free edge (31) of the first impact surface (29) in the direction of flow (F1), so that the liquid driven along the first impact surface (29) by the flow of exhaust gas to the remote section (35) falls on the second surface of the impact (37);
the first and second impactors (25, 27) being in the form of sections of an accordion part (57).

2. Injection device according to claim 1, wherein the first impact surface (29) is in a plane inclined relative to the flow direction (F1).

3. Injection device according to claim 1 or 2, wherein the normal (N1) to the first impact surface (29) forms an angle of between 100° and 170° to the direction of flow (F1).

4. Injection device according to any one of the preceding claims, wherein the second impact surface (37) is in a plane inclined with respect to the flow direction (F1).

5. Injection device according to any one of the preceding claims, wherein the normal (N2) to the second impact surface (37) forms an angle of between 190° and 260° to the direction of flow (F1).

6. Injection device according to any one of the claims 1 to 4, wherein the normal (N2) to the second impact surface (37) forms an angle between 100° and 170° to the direction of flow (F1).

7. Injection device according to any one of the preceding claims, wherein the first and second impact surfaces (29, 37) are parallel to each other.

8. Injection device according to claim 1, wherein the first and second impact surfaces (29, 37) are perpendicular to the direction of flow (F1), and wherein the second impact surface (37) has a surface area larger than the first impact surface (29), wherein the first impact surface (29) conceals a central zone of the second impact surface (37) in the direction of flow (F1).

9. Injection device according to any one of the preceding claims, wherein the second impact surface (37) is delimited by a free edge (45) having at least one near section (47) relatively less distant from the injector (9) in the direction of flow (F1) and a remote section (49) relatively further away or as far as possible from the injector (9) in the direction of flow (F1), wherein the injection device (5) has at least one third impactor (41) having a third impact surface (43), wherein the third impact surface (43) has a zone (51) located under the remote section (49) of the free edge (45) of the second impact surface (37) in the flow direction (F1), so that the liquid driven along the second impact surface (37) by the exhaust gas flow to the remote section (49) falls on the third impact surface (43).

10. Injection device according to any one of the preceding claims, wherein the first impact surface (29) is arranged opposite the injector (9) in the direction of injection in order to intercept directly at least 50% of the liquid jet (J), preferably at least 60% of the liquid jet (J).

11. Exhaust line (1) comprising an injection device (5) according to any one of the preceding claims.
